# FASCICULE DE BREVET EUROPEEN

(11) **EP 0 454 533 B1**
(45) Date de publication et mention de la délivrance du brevet: **06.08.1997**
(21) Numéro de dépôt: 91400993.1
(22) Date de dépôt: 15.04.1991
(51) Int. Cl.: C09J 161/04

(54) **Emulsion de composition résinique pour adhésifs aqueux**
Emulsionsförmige Harzzusammensetzung für wässrige Klebstoffe
Emulsion of a resin composition for aqueous adhesives

(30) Priorité: 25.04.1990 FR 9005283
(43) Date de publication de la demande: 30.10.1991
(73) Titulaire: LES DERIVES RESINIQUES ET TERPENIQUES, 40105 Dax (FR)
(72) Inventeur: Bonneau, Gustave, F-64200 Biarritz (FR); Dubearnes, Robert, F-40560 Vielle-St-Girons (FR)
(74) Mandataire: Polus, Camille

(56) Documents cités:
- FR-A- 2 019 609
- FR-A- 2 227 293
- FR-A- 2 227 310
- US-A- 4 280 942
- Bulletin Technique DUPONT (UK) : "Contact adhesives based on carboxylated neoprene latex 115", révisée le 12 Août 1982

## Description

La présente invention a pour objet une émulsion aqueuse de composition résinique et un adhésif obtenu à partir d'une telle émulsion et d'un élastomère.

Il s'agit plus précisément d'une émulsion d'une résine phénolique thermoréactive constituée par un résol et d'une résine phénolique thermoplastique, qui est compatible avec des élastomères tels qu'un latex polychloroprène (PCP) pour former des adhésifs aqueux permettant d'obtenir un excellent compromis des valeurs d'adhésion et de résistance à la chaleur d'un assemblage collé.

Jusqu'à maintenant l'application des formules d'adhésifs contact à base de latex PCP a connu un développement très limité en raison de la faible résistance à la chaleur des assemblages collés avec ces produits, comparée à celle des joints obtenus avec les adhésifs homologues en milieu solvant. A cet égard, il y a lieu de préciser que, selon les conditions de test utilisées dans la présente description, une colle à résistance à la chaleur moyenne donne une température de rupture du joint entre 60° et 70°C et une colle à résistance à la chaleur améliorée permet de porter cette température au-dessus de 100°C.

Ainsi, dans la notice technique de la Société DU PONT intitulée "Contact adhesives based on carboxylated NEOPRENE Latex 115", révisée le 12 Août 1982, on présente des compositions d'adhésifs contact aqueux à base d'un latex polychloroprène procurant des assemblages de résistance à la chaleur moyenne, la température de rupture du joint étant inférieure à 80°C.

Par ailleurs, un adhésif contact en milieu solvant renferme entre 60 et 70% de solvants légers qui sont généralement des mélanges ternaires de toluène, cétone et esters acétiques, inflammables et produisant des vapeurs toxiques, dont la suppression ou la diminution est souhaitable.

En conséquence, outre l'objectif fondamental de limiter la présence de solvant au strict nécessaire, le but de l'invention est de fournir un système résinique en milieu aqueux permettant la formulation de colles contact à base de latex tel que PCP ayant les mêmes performances et la même présentation sous forme d'un adhésif monocomposant que les colles contact PCP solvant de l'état de la technique.

Selon l'invention, on a maintenant réussi à préparer des adhésifs aqueux à base d'élastomère tels que le taux de solvant dans la colle finale est inférieur à 3% et permet de ce fait à ce produit d'être en conformité avec la législation actuelle sur les colles dites aqueuses.

L'invention a donc pour objet une émulsion aqueuse de composition résinique (CR) comprenant un résol phénolique (RD), obtenu par réaction d'alkylphénols et de formol, de poids moléculaire compris entre 1500 et 3500, traité par de l'oxyde de magnésium MgO à raison de 5 à 10% en poids du résol, une résine terpène phénolique thermoplastique (RTD), obtenue par réaction d'un mono-ou polyterpène cyclique ou linéaire sur un phénol, la proportion de résol et de résine terpène phénolique allant de 1:2 à 2:1 en poids, et de 5 à 15% de solvant par rapport au mélange résinique RD/RTD.

Le résol phénolique est l'élément du mélange résinique qui permet d'obtenir la caractéristique de résistance à la chaleur. Il s'agit en effet d'une résine réactive à groupements méthylols libres qui avec les groupements hydroxylés des phénols réagissent ultérieurement avec l'oxyde métallique de l'émulsion pour donner respectivement un réseau de chélates et de phénates métalliques infusibles.

Les oxydes métalliques utilisés sont principalement MgO, ZnO, CdO, à raison de 5 à 10% en poids du résol, en particulier 6 à 8% (3 à 4% de l'émulsion CR à 50%).

Selon l'invention le résol est de préférence essentiellement un produit de réaction d'alkyl-phénols, notamment de terbutylphénol (TBD) et de formol. Avantageusement le résol phénolique est à base d'un mélange de terbutylphénol-formol (TBDF) et de terpènes phénol-formol (TDF), notamment en une proportion TBD : TD = 90:10 à 50:50 parties en poids, de préférence de 80:20 à 65:35 parties en poids.

Les terpènephénols ou terpènylphénols sont des produits de réaction des terpènes cycliques ou linéaires sur le phénol ou un bisphénol.

Le terme terpénylphénol englobe les formes menthényle, menthanyle, isobornyle et tous les groupes dérivés des terpènes linéaires après réaction avec le phénol ou bisphénol, dans un mélange complexe de structure de type ortho- et para-terpényl-phénol et terpényl-bisphénol.

La structure terpényl bisphénol présente la formule générale 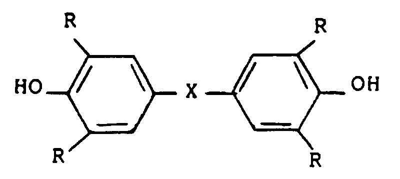 dans laquelle
X peut être un radical terpène cyclique ou linéaire, une dioléfine aliphatique ou aromatique (par exemple diclyclopentadiène ou divinylbenzène;
R peut être un hydrogène, un alkyl-ou aryl-phénol, une oléfine aromatique ou aliphatique. Dans cette dernière catégorie, les terpènes cycliques ou linéaires seront utilisés de préférence en raison des propriétés collantes remarquables des terpénylphénols.

Les proportions molaires entre terpène et phénol seront choisies de façon à laisser sur le cycle phénol des positions réactives libres en ortho ou para qui permettront après réaction avec le formol, l'intégration des terpènylphénols dans le résol phénolique dont le constituant de base sera un alkylphénol et plus particulièrement le terbutylphénol.

La réactivité des terpénylphénols avec le formol est fonction de leur teneur en groupement hydroxyle phénolique. Dans la présente invention, le taux d'OH se situe avantageusement entre 3% et 7% et de préférence entre 4 et 6% en poids.

Ces produits disponibles dans le commerce sont ultérieurement précondensés avec du formol.

Le résol phénolique, avant dispersion et donc avant traitement par l'oxyde métallique, doit présenter une masse moléculaire comprise entre 1500 et 3500, et de préférence entre 2000 et 3000, pour permettre des performances adhésives optima - et ceci très vraisemblablement pour des raisons de compatibilité optimum entre ledit résol et l'élastomère.

La présence de résine terpène phénolique (RTD) dans le mélange résinique a également un rôle essentiel. Il s'agit du produit de réaction d'un terpène (mono-ou poly-terpène cyclique ou linéaire) sur un phénol, par exemple un pinène ou carène sur un diphénolmenthane jusqu'à saturation des positions réactives libres du phénol. De tels produits sont décrits par exemple dans FR-A-2 303 817 et FR-A-2 307 836. C'est une résine thermoplastique très compatible et présentant des propriétés adhésives remarquables avec l'élastomère. Elle permet de favoriser le contact et par conséquent la force d'adhésion du joint collé. Le rapport résol phénolique/RTD est très important et on peut estimer que le meilleur compromis tenue chaleur/adhésion se situe pour les valeurs du rapport comprises entre 1/2 et 2/1 et de préférence entre 40/60 et 60/40 parties en poids.

Ce mélange résinique, composé du résol phénolique et de résine terpènephénolique, est ensuite mélangé avec du solvant dans une proportion allant de 85/ 15 à 95/5.

Le solvant peut être choisi parmi les solvants aromatiques (par ex. le toluène) et les solvants terpéniques (carbures, alcools et éthers terpéniques), de préférence en mélange et les hydrocarbures aliphatiques.

Cette solution concentrée du mélange résinique est finalement dispersée dans l'eau par la technique d'inversion de phase en présence d'un surfactant pour obtenir la composition résinique sous forme d'une émulsion aqueuse (Emulsion CR), par exemple à 50% d'extrait sec.

On procède ensuite à la formulation proprement dite d'un adhésif contact en milieu aqueux. Cette formulation comporte les étapes suivantes :
1. Traitement de l'émulsion CR avec l'oxyde métallique, notamment de magnésie active, à froid sous agitation modérée, et
2. Mélange de l'émulsion CR/oxyde métallique avec l'élastomère en dispersion aqueuse, notamment dans une proportion de 10 à 100 parties d'émulsion (à 50%), de préférence de 25 à 75 parties en poids d'émulsion (à 50%), pour 100 parties en poids d'élastomère en dispersion aqueuse à 50%, puis ajout de divers adjuvants pour régler la rhéologie du milieu.

L'élastomère peutêtre choisi notamment dans les familles ci-après : polychloroprène (PCP), polymères éthylène-acétate de vinyle (EVA), acrylonitrile-butadiène (NBR), polyacrylates et leurs copolymères, polyuréthanne (PU), caoutchouc naturel, polymères styrène-butadiène, styrène-butadiène carboxylé, styrène-isoprène-styrène (SIS), styrène-butadiène-styrène (SBS). Le choix de cet élastomère dépend des matériaux à coller et des performances désirées.

La colle contact aqueuse ainsi préparée et appelée ci-après "Colle CR" sera finalement testée dans les assemblages coton/coton, selon le mode opératoire indiqué pour déterminer les deux caractéristiques essentielles de ces joints :
- force d'adhésion,
- résistance chaleur.

Les exemples suivants illustrent l'invention. Les parties (p) sont en poids sauf mention contraire.

### EXEMPLE 1

### a) Préparation du résol

Produits utilisés :
- Eau 117,25
- Lessive de soude à 29,6% 31,00
- Terbutylphénol 58,16 )
- Dertophène A 115* 14,54 ) 100 parties
- Paraformaldéhyde 27,30 ) réactives
- HCl à 33% 25,00
- Eau 7,80

* Composé d'un mélange de diphénolmenthane, dimenthényl-diphénol-menthane, de menthényl-phénol et d'isobornyl-phénol.

On charge dans un réacteur 17,25 p. d'eau et 31 p. de lessive de soude à 29,6% que l'on porte à une température de 50°C. On introduit 58,16 p. de terbutylphénol et on élève la température à 70-75°C tout en agitant. A 75°C, on introduit 14,54 p. de terpène phénol en paillettes (Dertophène A 115 de la société DRT) et on maintient le mélange 1 h à cette température. Après avoir réduit la température du mélange à 50°C, on introduit 27,30 p. de paraformaldéhyde, on porte la température à 62-65°C et la maintient pendant 8 h. Ensuite on refroidit le mélange à 25°C et neutralise par 25 p. de HCl à 33% dilué avec 7,8 p. d'eau. On lave deux fois avec 100 p. d'eau pendant 10 min. pour éliminer le NaCl formé. Le pH final est entre 3-4. Rendement : environ 90%.

### b) Pré-réticulation du résol

A 85 p. du résol obtenu ci-dessus, on ajoute 15 parties d'un mélange solvant composé de toluène et d'un solvant terpénique (Dertol 20 DD de la société DRT) dans un rapport 1:2 en volume.

La solution obtenue est portée à 98° ± 2°C, température d'entraînement des eaux résiduaires de lavage et de l'eau de polycondensation du résol. On maintient la solution 2 h à cette température, puis on monte en 30 min. à 105° ± 2°C. Cette température est maintenue pendant environ 2 h pour obtenir une fourchette de masse moléculaire du résol comprise entre 2 000 et 3 000.

On ajoute alors à cette solution la même quantité de solution de 85 p. de résine terpène phénolique thermoplastique (produit de réaction du diphénol-menthane sur des terpènes, commercialisé par la Société DRT sous la marque Dertophène T) et de 15 parties de toluène/ Dertol 20 DD (1/2 v/v).

Le mélange M de solution résinique ainsi obtenu est ensuite mis en dispersion de la façon suivante :

### c) Dispersion

100 p. de M sont introduites à une température comprise entre 75 et 90° dans un turbo mélangeur ou un malaxeur disperseur. On y ajoute 20 p. de surfactif (Lanadin 121 (35%) de la société CFPI) et on y introduit en 15 min. 80 parties d'eau préchauffée à 70°, sous agitation de 2 000 rpm.

On obtient une émulsion CR dont les caractéristiques sont les suivantes :
- Extrait sec 49,1%
- pH 5,4
- Viscosité à 20°C 120 mPa.s
- Taille des particules 0,5 )m

### d) Traitement par oxyde métallique

On fait réagir à température ambiante, sous légère agitation, 400 p. d'émulsion CR obtenue ci-dessus avec 8 p. de magnésie active (indice d'iode 150-170), soit 8% en poids par rapport à la résine réactive contenue dans la composition résinique, en présence de 10 p. d'eau : la réaction de MgO est suivie par IR, par examen des bandes correspondant aux groupements CH₂OH et OH de la résine. Ces groupements sont éliminés au bout de 5 h de réaction.

On détruit ensuite l'émulsion de la manière suivante : 50 g d'émulsion CR est "cassée" par saturation de l'eau de l'émulsion avec du chlorure de sodium en excès. La phase résinique est ensuite solubilisée dans 125 ml de toluène à l'aide d'un extracteur liquide/liquide à température ambiante. On procède finalement au dosage du métal de l'oxyde dans les cendres de la solution.

On trouve que sur les 8 % d'oxyde initial, 6% ont réagi chimiquement sur la résine réactive. La magnésie libre est conservée dans le milieu comme stabilisant pour l'élastomère utilisé lors de l'élaboration de l'adhésif.

L'émulsion CR traitée par la magnésie dans cet exmple sera référencée Emulsion CRM01 dans les exemples d'application 3-5 ci-après.

### EXEMPLE 2

### a) Préparation du résol : Comme à l'exemple 1a)

### b) Pré-réticulation du résol :

On opère comme dans l'exemple 1 b), sauf que l'on ajoute à 100 p. de solution de résol une quantité de solution de 340 p. de résine terpène phénolique thermoplastique (produit de réaction du diphénol-menthane sur des terpènes, commercialisé par la Société DRT sous la marque Dertophène T) et de 60 p. de toluène/Dertol 20 DD (1/2 v/v).

Le mélange M de solution résinique ainsi obtenu est ensuite mis en dispersion comme dans l'exemple 1c ). On obtient une émulsion CR avec les mêmes caractéristiques que précédemment.

### d) Traitement par oxyde métallique :

On fait réagir à température ambiante, sous légère agitation, 400 p. d'émulsion CR obtenue ci-dessus avec 3,2 p. de magnésie active (indice d'iode 150-170), soit 8% en poids par rapport à la résine réactive contenue dans la composition résinique, en présence de 4,2 p. d'eau : la réaction de MgO est suivie par IR, par examen des bandes correspondant aux groupements CH₂OH et OH de la résine. Ces groupements sont éliminés au bout de 5 h de réaction.

On détruit ensuite l'émulsion de la manière suivante : 50 g d'émulsion CR est "cassée" par saturation de l'eau de l'émulsion avec du chlorure de sodium en excès. La phase résinique est ensuite solubilisée dans 125 ml de toluène à l'aide d'un extracteur liquide/liquide à température ambiante. On procède finalement au dosage du métal de l'oxyde dans les cendres de la solution.

On trouve que sur les 3,2 % d'oxyde initial, 2,4 ont réagi chimiquement sur la résine réactive. La magnésie libre est conservée dans le milieu comme stabilisant pour l'élastomère utilisé lors de l'élaboration de l'adhésif.

L'émulsion CR traitée par la magnésie dans cet exmple sera référencée Emulsion CRM02 dans les exemples d'application 3-5 ci-après.

### EXEMPLE 3 : formulation d'adhésif.

On procède à la formulation d'une colle contact aqueuse avec chacune des 2 émulsions CR traitées à la magnésie des exemples 1 et 2 (Emulsion CRMO₁ et et Emulsion CRMO₂), en combinaison avec 2 latex polychloroprène :
1 - DISPERCOLL C74 de la Société BAYER
2 - Latex NEOPRENE 115 de la Société DUPONT et un adjuvant cellulosique pour régler la rhéologie du milieu (NATROSOL 250 HHBR de la société AQUALON).

Les colles contact aqueuses monocomposants ainsi préparées et dénommées ci-après colles CR11, CR21 et CR22 ont été testées dans des assemblages coton/coton, pour déterminer les 2 caractéristiques essentielles de ces joints :
- force d'adhésion
- résistance chaleur

Les formules et résultats des essais réalisés comparativement aux colles ci-après, formulées de manière classique sont rassemblés dans le tableau 1.
C1 - Colle standard solvant monocomposant résistant à la chaleur, à base de PCP fabriquée par la Société GENTIA-PHILPLUG.
C21 - Colle aqueuse monocomposant à base de Dermulsène DT (émulsion à 50% de DERTOPHENE T - cf ci-dessus) et de latex DISPERCOLL C74.
C22 - Colle aqueuse monocomposant à base de Dermulsène CT (cf ci-dessus) et de latex NEOPRENE 115.

Les résultats des colles formulées avec les émulsions CRMO₁ et CRMO₂ sont comparés : en premier lieu avec les résultats des colles C21 et C22, que l'on peut qualifier de standard aqueux et qui sont caractérisés par des forces d'adhésion à température ambiante d'un bon niveau, mais aussi par des tenues à la chaleur faible (<80°C); en second lieu, avec ceux d'un standard solvant C1 qui présente à la fois une excellente tenue chaleur et une bonne adhésion.

Le test de tenue chaleur est effectué sur un assemblage coton/coton de 10 cm de longueur, fermé à température ambiante et soumis à une force constante de pelage de 1Kg et à une montée de température linéaire de 1°C/minute.

Les résultats sont exprimés par 2 caractéristiques :
- la température de début de pelage
- la température de rupture du joint.

Dans ce test, nous notons un excellent comportement de la colle CR11, riche en résine phénolique réactive et dont les performances s'apparentent à celles du standard solvant C1.

Nous notons également que les colles CR21 et CR22, peu chargées en résine réactive, sont effectivement inférieures à la colle CR11, mais présentent toutefois un gain substantiel de tenue chaleur d'environ 20°C, sur des standards aqueux C21 etC22 qui eux ne contiennent pas de résine active.

Le test d'adhésion est effectué de deux manières :
- par pelage dynamique d'un assemblage souple (coton/coton) à 50 mm/minute et à 20, 50 et 70°C - Résultats en N/2 cm
- par cisaillement d'un assemblage rigide (panneau de particule/Formica) à : 5 mm/minute et 70, 90 et 110°C - Résultats en N/pouce² (6,45 cm²).

On a constaté que :
- à température ambiante, l'adhésion est légèrement défavorisée par l'augmentation de la teneur en résine réactive
- à température élevée, les conclusions sont inversées.

En adhésion par pelage à 50 et 70°C, CR11 est égal ou supérieur en standard solvant, CR21 et CR22 se situent entre CR11 et le standard aqueux C21 et C22.

En cisaillement à 70, 90 et 110°C, CR11>C1>CR21, CR22>C11.

En conclusion, les résultats obtenus sur les colles aqueuses PCP monocomposant montrent clairement l'avantage de l'émulsion CRMO sur une résine thermoplastique (Dermulsène DT) en ce qui concerne la résistance à la chaleur des assemblages. Pour obtenir des résultats du même ordre, il faut avoir recours, soit à des formules PCP aqueuses à 2 composants, soit à des formules PCP solvants monocomposants, mais dans les deux cas, le formulateur devra faire face respectivement à deux inconvénients majeurs :
- une vie en pot limitée à quelques heures
- un taux de solvant de l'ordre de 75%.

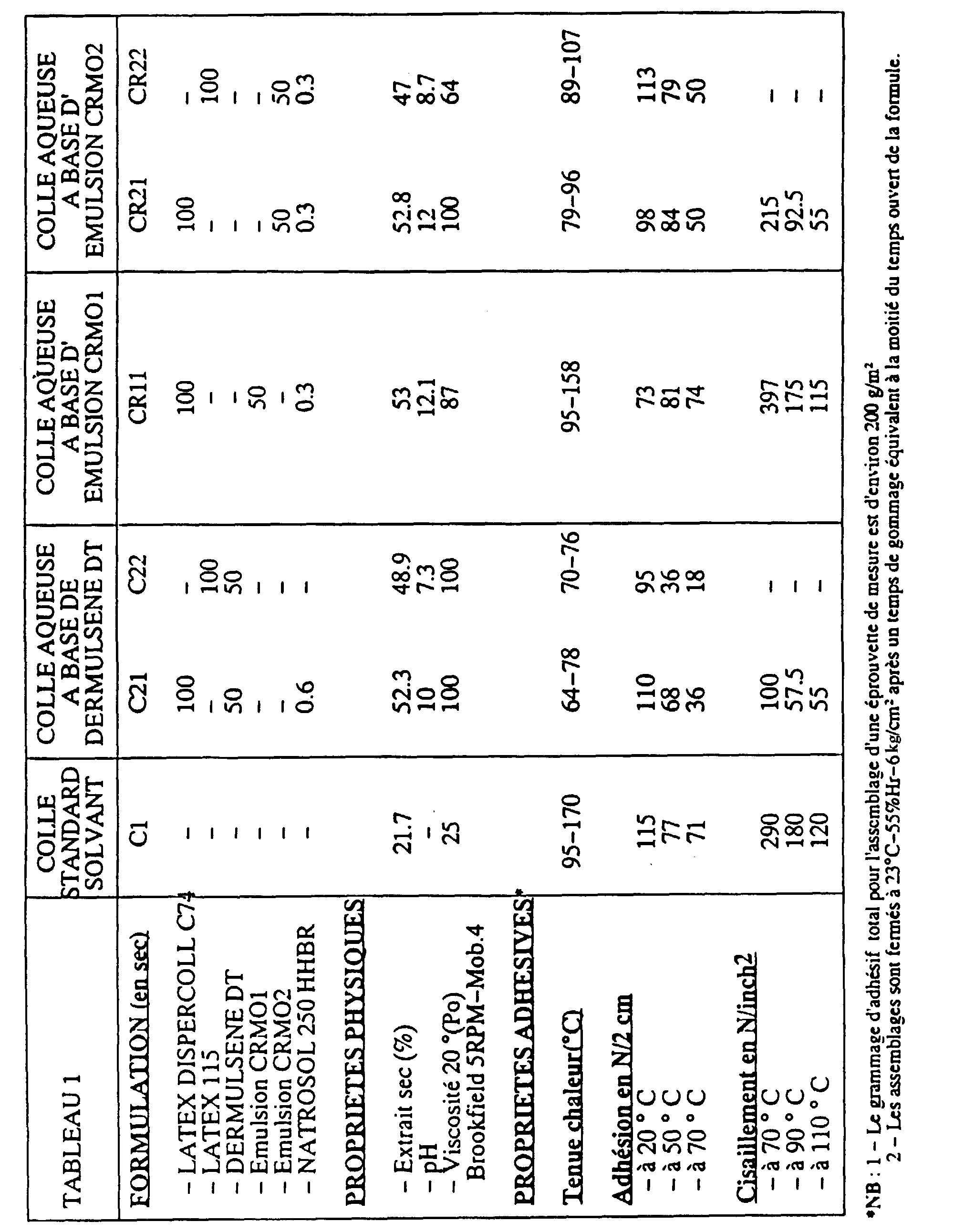

### EXEMPLE 4

### Application dans une colle aqueuse pour revêtement souple de sols ou murs

Les émulsions CR traitées à la magnésie des exemples 1 et 2, dénommées ci-après, Emulsion CRMO1 et CRM02, sont formulées avec :
- un latex acrylique de -20°C de point de transition vitreuse (TG) - (ACRONAL V303 de la Société BASF),
- un mélange de charges : une silice (MILLISIL de la Société SIFRACO) et un carbonate de calcium (DURCAL 15 de la Société OMYA),
- un adjuvant pour régler la rhéologie du milieu (BORCHIGEL 75 de la Société BORCHERS).

Ces deux colles dénommées ci-après, respectivement CR1A et CR2A, ont été testées dans deux types d'assemblage.
- PVC souple/ETERNIT
- Aiguilleté/ETERNIT
afin de déterminer les trois principales caractéristiques de ces joints :
- tenue à la chaleur
- adhésion
- pouvoir piégeant

Les formules et résultats des essais, réalisés comparativement à la colle SADERFIX de la Société CECA sont rassemblés dans le tableau 2.
- Résultats :

En tenue chaleur, la supériorité des colles CR1A et CR2A sur le standard du commerce est indiscutable, et à nouveau comme nous l'avions noté dans l'exemple 3, la tenue chaleur est d'autant plus grande que la teneur en résine réactive est plus importante dans l'émulsion CR traitée à la magnésie.

En adhésion, les valeurs restent du même ordre pour les trois colles testées, avec toutefois un léger avantage pour l'émulsion CRMO2, la moins riche en résine réactive, dans le cas de l'assemblage PVC/ETERNIT.

En contrepartie, le pouvoir piégeant des colles CR1A et 2A accuse un léger retard dans les toutes premières minutes, mais ce problème doit se régler avec un extrait sec des émulsions CR plus élevé.

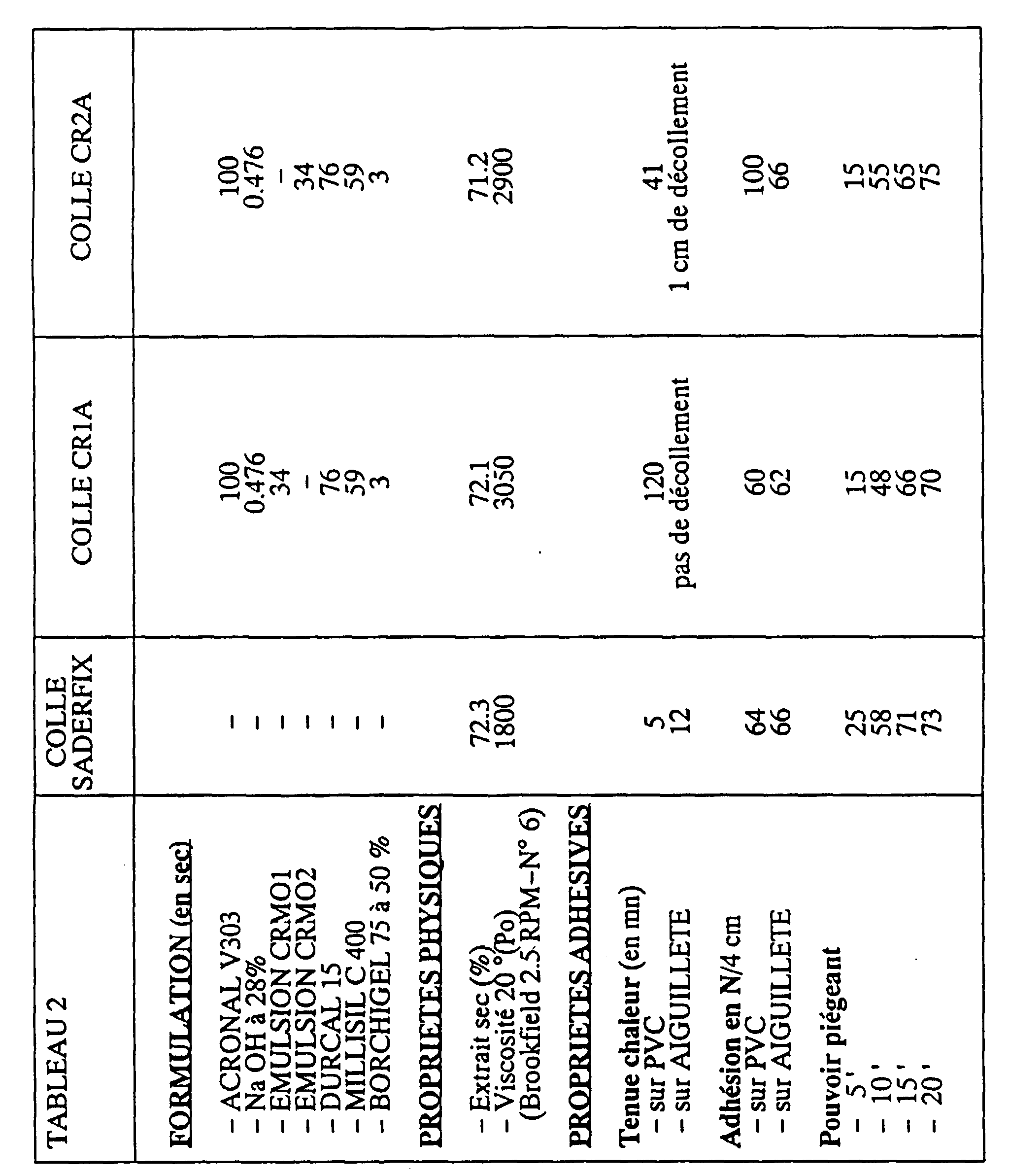

### EXEMPLE 5

### Application dans une formulation thermocollante à base d'un latex polyuréthanne

Les émulsions CR traitées à la magnésie des exemples 1 et 2 dénommées ci-après Emulsion CRMO1 et Emulsion CRM02, sont formulées avec 2 latex polyuréthannes :
- latex WITCOBOND 740 de la Société BAXBENDEN et dénommé ci-après STANDARD PU1
- latex QUILASTIC 156 de la Société DANQUINSA et dénommé ci-après STANDARD PU2.
et deux adjuvants pour régler la rhéologie du milieu :
- silice N20 de la Société WACKER CHIMIE
- BORCHIGEL 75 de la Société BORCHERS

Les quatre colles ainsi préparées et dénommées ci-après rexpectivement CR1PU1, CR1PU2, CR2PU1, CR2PU2 ont été testées dans des assemblages coton/coton pour étudier comme dans les exemples 3 et 4 l'influence des Emulsions CRMO₁ et CRMO₂ sur la tenue à la chaleur et l'adhésion des joints collés.

Contrairement aux formules à base de latex polychloroprène qui permettent un assemblage à température ambiante, les formules polyuréthannes nécessitent une réactivation des films de colle avant fermeture des assemblages. Les températures de réactivation retenues pour les essais ci-après sont : 45°C et 60°C. Il est à noter qu'une température de réactivation basse est toujours intéressante dans le cas d'assemblage de supports sensibles à la chaleur et à cet égard la présence de résine peut s'avérer bénéfique dans la formule.

Les formules et résultats des essais réalisés comparativement aux colles ci-après, sont rassemblés dans le tableau 3 :
- colle standard PU1
- colle standard PU2
- colle DT PU1
- colle DT PU2

Les deux premières ne contiennent pas de résine.

Les deux dernières ne contiennent pas d'émulsion CR traitées à la magnésie, mais seulement une émulsion de DERMULSENE DT.

A nouveau, l'action des deux émulsions CR traitées à la magnésie sur la tenue à la chaleur du joint collé est particulièrement significative et d'autant plus que l'émulsion est riche en résine réactive.

Inversement, nous notons que les colles DT/PU1 et DT/PU2 formulées avec une émulsion de résine "tackifiante" (collante) traditionnelle, affectent très sensiblement la tenue chaleur des deux standards PU1 et PU2.

En ce qui concerne l'adhésion, la présence d'émulsion CR et DT s'avère généralement bénéfique et l'amélioration est particulièrement sensible sur le standard PU2 à la température de réactivation de 45°C. En d'autres termes, il est permis dans ce cas d'atteindre de bonnes valeurs d'adhésion à une température de réactivation des films inférieure à 45°C.

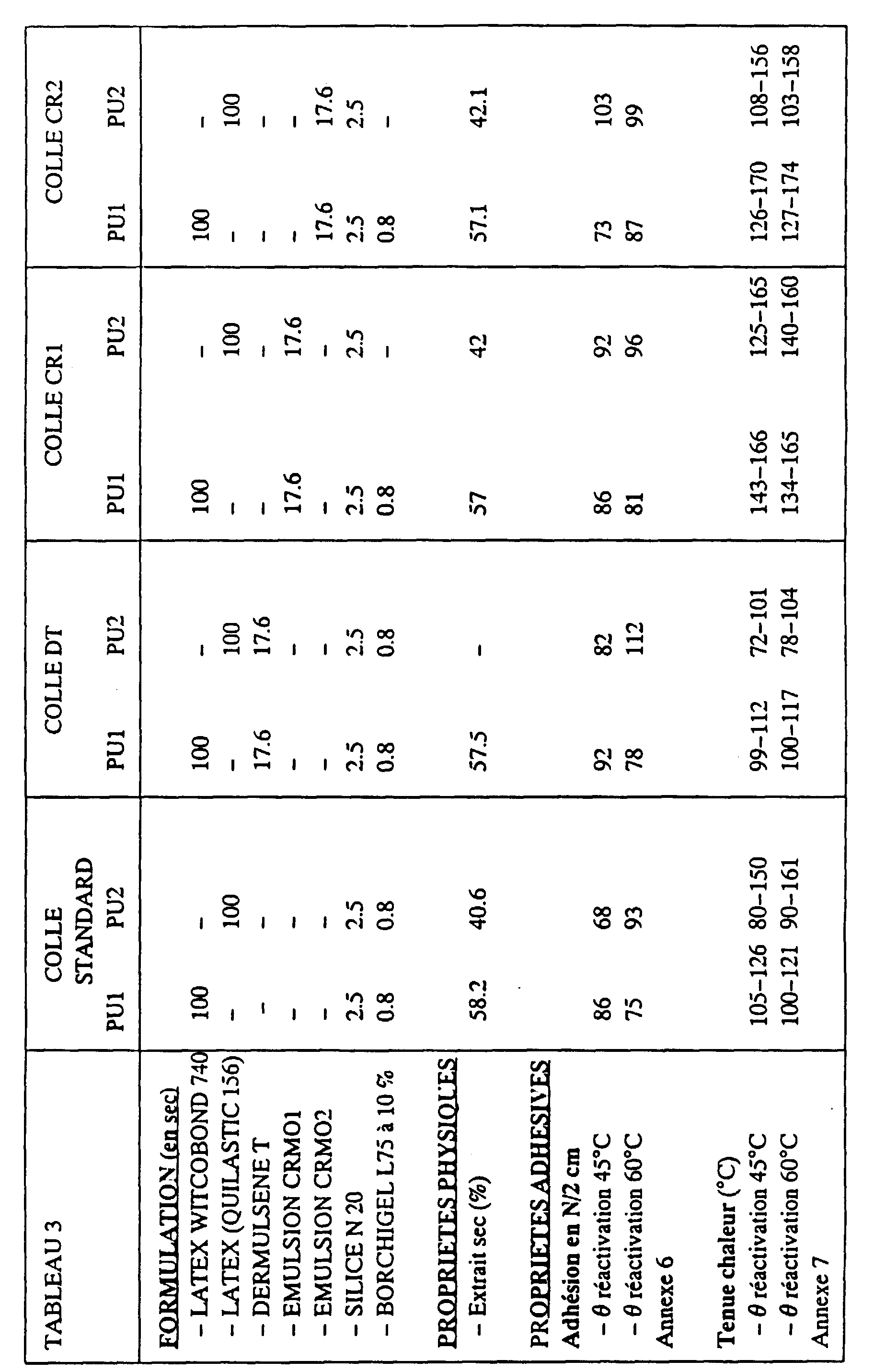

## Revendications

1. Emulsion aqueuse de composition résinique comprenant un résol phénolique (RD) (obtenu par réaction d'alkylphénols et de formol) de poids moléculaire compris entre 1500 et 3500, traité par MgO à raison de 5 à 10 % en poids du résol, une résine terpène phénolique thermoplastique (RTD) (obtenue par réaction d'un mono- ou polyterpène cyclique ou linéaire sur un phénol), la proportion de résol et de résine terpène phénolique allant de 1:2 à 2:1 en poids, et de 5 à 15 % de solvant par rapport au mélange résinique RD/RTD.

2. Emulsion selon la revendication 1, caractérisée en ce que ladite proportion de résol et de résine terpène phénolique est comprise entre 40:60 et 60:40 parties en poids.

3. Emulsion selon l'une des revendications 1 à 2, caractérisée en ce que le résol est essentiellement un produit de réaction de terbutylphénol-formol.

4. Emulsion selon la revendication 3, caractérisée en ce que le résol consiste en un mélange de produits de réaction de terbutylphénol-formol (TBDF) et de terpènes phénol-formol (TDF) en une proportion (TBD:TD) allant de 90:10 à 50:50 parties en poids.

5. Emulsion selon la revendication 4, caractérisée en ce que ladite proportion TBD:TD est comprise entre 80:20 et 65:35 parties en poids.

6. Emulsion selon la revendication 5, caractérisée en ce que le poids moléculaire du résol phénolique est essentiellement dans la fourchette de 2000 à 3000.

7. Emulsion selon l'une quelconque des revendications 1 à 6, caractérisée en ce que MgO est utilisé à raison de 6 à 8 % en poids du résol.

8. Adhésif aqueux comprenant un élastomère en dispersion aqueuse et une émulsion selon l'une quelconque des revendications 1 à 7, caractérisé en ce qu'il comprend de 10 à 100 parties d'émulsion à 50 % pour 100 parties en poids de dispersion d'élastomère à 50 %.

9. Adhésif selon la revendication 8, caractérisé en ce que l'élastomère est choisi parmi un polychloroprène, un copolymère éthylène/acétate de vonyle, un acrylonitrile butadiène, un polyuréthanne ou un polyacrylate et ses copolymères.

10. Adhésif selon la revendication 9, caractérisé en ce qu'il comprend de 25 à 75 parties d'émulsion à 50 % pour 100 parties en poids d'élastomère en dispersion à 50 %.

## Patentansprüche

1. Wässrige Emulsion einer Harzzusammensetzung, umfassend ein (durch Reaktion von Alkylphenolen und Formol erhaltenes) Phenolresol (RD) mit einem Molekalargewicht von 1500 bis 3500, das mit MgO in einem Anteil von 5 bis 10 Gew.-% des Resols behandelt wurde, ein (durch Reaktion eines zyklischen oder geradkettigen Mono- oder Polyterpens mit einem Phenol erhaltenes) themoplastisches Rhenolterpenharz (RTD), wobei das Gewichtsverhältnis von Resol und Phenolterpenhars 1:2 bis 2:1 beträgt, und 5 bis 15 % Lösungsmittel, bezogen auf die RD/RTD-Harzmischung.

2. Emulsion nach Anspruch 1, dadurch gekennzeichnet, daß das Verhältnis von Resol und Phenolterpenharz 40:60 bis 60:40 Gewichtsteilen beträgt.

3. Emulsion nach einem der Ansprüche 1 bis 2, dadurch gekennzeichnet, daß das Resol im wesentlichen ein Produkt der Reaktion von Terbutylphenol-Formol ist.

4. Emulsion nach Anspruch 3, dadurch gekennzeichnet, daß das Resol aus einer Mischung von Produkten der Reaktion von Terbutylphenol-Formol (TBDF) und Phenol-Formol-Terpenen (TDF) in einem Verhältnis (TBD:TD) von 90:10 bis 50:50 Gewichtsteilen besteht.

5. Emulsion nach Anspruch 4, dadurch gekennzeichnet, daß das Verhältnis von TBD:TD 80:20 bis 65:35 Gewichtsteilen beträgt.

6. Emulsion nach Anspruch 5, dadurch gekennzeichnet, daß das Molekulargewicht des Phenolresols im wesentlichen im Bersich von 2000 bis 3000 liegt.

7. Emulsion nach einem der Ansprüche 1 bis 6, dadurch gekennzeichnet, daß MgO in einem Anteil von 6 bis 8 Gew.-% des Resole verwendet wird.

8. Wässriger Klebstoff, der ein Elastomer in wässriger Dispersion und eine Emulsion nach einem der Ansprüche 1 bis 7 aufweist, dadurch gekennzeichnet, daß er 10 bis 100 Teile 50 %ige Emulsion auf 100 Gewichtsteilen 50 %ige Elastomerdispersion aufweist.

9. klebstoff nach Anspruch 8, dadurch gekennzeichnet, daß das Blastomer aus einem Polychloropren, einem Ethylen/-Vonylacetat-Copolymer, einem Acrylonitrilbutadien, einem Polyurethan oder einem Polyacrylat und seinen Copolymeren ausgewählt ist.

10. Klebstoff nach Anspruch 9, dadurch gekennzeichnet, daß er 25 bis 75 Teile 50%ige Emulsion auf 100 Gewichtsteilen 50 %ige Blastomerdispersion aufweist.

## Claims

1. Aqueous emulsion of a resin composition comprising a phenolic resol (PR) (obtained by reaction of alkylphenols and formaldehyde) with a molecular weight of between 1,500 and 3,500, treated with MgO in the proportion of 5 to 10% by weight of the resol, a thermoplastic phenolic terpene resine (PTR) (obtained by reaction of a cyclic or linear mono- or polyterpene with a phenol), the proportion of resol and of phenolic terpene resin ranging from 1:2 to 2:1 by weight, and from 5 to 15% of solvent with respect to the PR/PTR resin mixture.

2. Emulsion according to Claim 1, characterised in that the said proportion of resol and of phenolic terpene resin is between 40:60 and 60:40 parts by weight.

3. Emulsion according to either of Claims 1 and 2, characterized in that the resol is essentially a tert-butylphenol/formaldehyde reaction product.

4. Emulsion according to Claim 3, characterized in that the resol is composed of a mixture of tert-butylphenol/formaldehyde (TBPF) and of terpene phenol/formaldehyde (TPF) reaction products in a proportion (TBP/TP) ranging from 90:10 to 50:50 parts by weight.

5. Emulsion according to Claim 4, characterized in that the said proportion TBP:TP is between 80:20 and 65:35 parts by weight.

6. Emulsion according to Claim 5, characterized in that the molecular weight of the phenolic resol is essentially in the range from 2,000 to 3,000.

7. Emulsion according to any one of Claims 1 to 6, characterized in that MgO is used in the proportion of 6 to 8% by weight of the resol.

8. Aqueous adhesive comprising an elastomer as an aqueous dispersion and an emulsion according to any one of Claims 1 to 7, characterized in that it comprises from 10 to 100 parts of 50% emulsion per 100 parts by weight of 50% elastomer dispersion.

9. Adhesive according to Claim 8, characterised in that the elastomer is chosen from a polychloroprene, an ethylene/vinyl acetate copolymer, an acrylonitrile/butadiene, a polyurethane or a polyacrylate and its copolymers.

10. Adhesive according to Claim 9, characterized in that it comprises from 25 to 75 parts of 50% emulsion per 100 parts by weight of elastomer as a 50% dispersion.
